(19) Europäisches Patentamt
European Patent Office
Office européen des brevets

(11) Veröffentlichungsnummer: **0 088 326**
**B1**

(12) # EUROPÄISCHE PATENTSCHRIFT

(45) Veröffentlichungstag der Patentschrift: **12.06.85**

(51) Int. Cl.⁴: **C 07 C 131/00**

(21) Anmeldenummer: **83101936.9**

(22) Anmeldetag: **28.02.83**

(54) **Alpha-Oximinoessigsäurederivate und ihre Herstellung.**

(30) Priorität: **09.03.82 DE 3208330**

(43) Veröffentlichungstag der Anmeldung: **14.09.83 Patentblatt 83/37**

(45) Bekanntmachung des Hinweises auf die Patenterteilung: **12.06.85 Patentblatt 85/24**

(84) Benannte Vertragsstaaten: **AT BE CH DE FR GB IT LI NL SE**

(56) Entgegenhaltungen:
**EP-A-0 048 911**
**EP-A-0 075 139**
**EP-A-0 088 325**
**US-A-2 470 083**
**US-A-3 104 258**

**CHEMICAL ABSTRACTS, Band 72, Nr. 21, 25. Mai 1970, Seite 66, Nr. 107662f, Columbus, Ohio, USA, Y. ISHITOYA et al.: "Gas chromatographic separation of tricarboxylic acid cycle components"**

(73) Patentinhaber: **BASF Aktiengesellschaft, Carl-Bosch-Strasse 38, D-6700 Ludwigshafen (DE)**

(72) Erfinder: **Graf, Hermann, Dr., Ginsterstrasse 15, D-6704 Mutterstadt (DE)**
Erfinder: **Schaefer, Peter, Dr., Im Buegen 16, D-6719 Kirchheim (DE)**

**EP 0 088 326 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue α-Oximinoessigsäurederivate und Verfahren zu deren Herstellung.

α-Oximinosäuren sind bereits als strukturelle Elemente in Naturstoffen bekannt (vgl. „J. Org. Chem.", *45*, 1880 [1980]).

Gegenstand der Erfindung sind α-Oximinoessigsäurederivate der Formel

$$R^2-O-N=CR^1-CO-X \qquad (I)$$

worin

$R^1$ Wasserstoff

$R^2$ einen ggf. substituierten $C_{1-6}$-Alkylrest
einen ggf. substituierten Allylrest
einen ggf. substituierten Propargylrest oder
einen ggf. substituierten Benzylrest, und

X Chlor oder Brom,

bedeuten.

In der Formel I bedeutet $R^2$ vorzugsweise einen Methyl-, Ethyl-, Allyl- oder Benzylrest.

Bei den erfindungsgemässen α-Oximinoessigsäurederivaten besteht die Möglichkeit der syn-Antistereoisomerie. Mit bekannten Methoden können die isomeren Formen rein erhalten werden. Wenn nicht anders vermerkt, beziehen sich die Angaben stets auf die Gemische.

Die neuen Verbindungen lassen sich herstellen, indem man

a) α-Oxocarbonsäuren der Formel II

$$R^1-CO-COOH \qquad (II)$$

worin $R^1$ angegebene Bedeutung hat, mit O-substituierten Acetonoximen der Formel III

$$CH_3-C(CH_3)=N-O-R^2 \qquad (III)$$

worin $R^2$ die angegebene Bedeutung besitzt, oder

b) α-Oxocarbonsäuren der Formel II mit O-substituierten Hydroxylaminen der Formel IV

$$H_2N-O-R^2 \qquad (IV)$$

worin $R^2$ die angegebene Bedeutung hat, oder Salzen dieser Verbindungen

umsetzt und die so erhaltenen Oximinocarbonsäuren der Formel V

$$R^2-O-N=C(R^1)-COOH \qquad (V)$$

worin $R^1$ und $R^2$ die angegebene Bedeutung haben, anschliessend mit einem Säurechlorid oder -bromid umsetzt.

Das Verfahren a wird vorzugsweise ohne Zusatz von Reaktionsbeschleunigern in Gegenwart einer anorganischen oder organischen Prototen- oder Lewis-Säure – wie Salzsäure, Bortrifluorid oder Zinkchlorid – bei Temperaturen zwischen 60 und 200° C durchgeführt. Bei dieser Temperatur destilliert das frei werdende Aceton fortlaufend ab. Als Lösungsmittel kommen in Betracht: Ether – wie Diisopropylether, Di-n-butylether, 1,4-Dioxan oder 1,2-Dimethoxyethan –, Keton – wie 2-Butanon, 3-Pentanon oder Cyclohexanon –, chlorierte Kohlenwasserstoffe – wie 1,2-Dichlorethan oder Chlorbenzol. Bei Einsatz von Alkoholen als Solvens, z. B. Propanol, Butanol oder Pentanol, werden die entsprechenden Ester von I erhalten, aus denen durch Verseifung nach bekannten Methoden die freien Säuren zugänglich sind.

Das Verfahren b wird bevorzugt mit den Salzen, insbesondere den Hydroxylammoniumchloriden, durchgeführt. Die Reaktion erfolgt ggf. in Gegenwart eines anorganischen oder organischen Puffers und ggf. in Anwesenheit eines wasserbindenden Mittels. Als Puffer kommen in Frage: Natrium- oder Kaliumacetat, Natrium- oder Kaliummonohydrogenphosphat, Natrium- oder Kaliumdihydrogenphosphat, Natrium- oder Kaliumhydrogencarbonat oder Natriumborat. Als Solvenzien seien für die Umsetzung b genannt: Wasser; Alkohole, wie Methanol, Ethanol oder Butanol; Ether, wie 1,2-Dimethoxyethan, Ethylenglykolmonomethylether, Di-n-butylether oder 1,4-Dioxan; Ketone, wie Aceton, 2-Butanon, 3-Pentanon oder Cyclohexanon. Wasserbindende Mittel sind beispielsweise Molekularsiebe.

Das Verfahren b wird vorzugsweise bei 40 bis 120° C durchgeführt. Verfahren a ist gegenüber b bevorzugt, da die Reaktionszeiten kürzer und die Ausbeuten besser sind.

Es ist besonders überraschend, dass man nach diesem Verfahren die Verbindungen erhält, in denen $R^1$ ein Wasserstoff bedeutet, weil Glyoxylsäurehalogenide nicht darstellbar sind.

Die α-Oximinocarbonsäurechlorid und -bromide erhält man, indem man die entsprechenden freien Säuren mit einem anorganischen oder organischen Säurechlorid oder -bromid in einem inerten Lösungs- oder Verdünnungsmittel, ggf. in Anwesenheit eines Reaktionsbeschleunigers und ggf. unter Zusatz einer anorganischen oder organischen Base zur Reaktion bringt. Anorganische oder organische Säurehalogenide sind z. B. Thionylchlorid, -bromid, Phosphortrichlorid, -tribromid, Phosphoroxychlorid, -bromid, Phosphorpentachlorid, -bromid, Oxalylchlorid, -bromid, Acetylchlorid, p-Toluolsulfonsäurechlorid oder α,α-Dichlormethylmethylether.

Für die Umsetzung geeignete Lösungs- oder Verdünnungsmittel sind z. B. aliphatische oder aromatische Kohlenwasserstoffe – wie Pentan, Cyclohexan, Petrolether, Benzol, Toluol oder Xylol; Halogenkohlenwasserstoffe – wie Methylenchlorid, 1,2-Dichlorethan oder Chlorbenzol – und Ether – wie Diethylether, 1,2-Dimethoxyethan, Tetrahydrofuran oder 1,4-Dioxan. Reaktionsbeschleuniger sind z. B. Pyridin oder N,N-Dimethylformamid.

Als Basen können z. B. Alkali- oder Erdalkalicarbonate, wie Natrium- oder Kaliumhydrogencarbonat, Natrium- oder Kaliumcarbonat, Calcium- oder Bariumcarbonat; Amine – wie Triethylamin, N,N-Dimethylanilin, N-Methylpiperidin oder Pyridin – verwendet werden. Die Reaktion wird bei 0 bis 120, vorzugsweise 20 bis 80° C, durchgeführt.

Die neuen Verbindungen sind wertvolle Zwischenprodukte zur Herstellung von fungizid wirksamen Verbindungen der Formel VI

$$R^5-NR^4-CO-CR^1=N-O-R^3 \qquad (VI)$$

worin

$R^1$ die angegebene Bedeutung hat,

$R^3$ Wasserstoff oder derselbe Rest wie $R^2$ ist, und

$R^4$ den α-Butyro-γ-lactonyl-, α-Valero-γ-lactonyl- oder 1-Butin-3-ylrest, die Gruppe $-CH(CH_3)-R^6-$ mit $R^6$ in der Bedeutung von $CO_2CH_3$, $CH(OCH_3)_2$, $CONH-NR^7R^8$, $CO-NH-NH-CS-NR^7R^8$ ($R^7$, $R^8$ = H, $CH_3$, $C_2H_5$, $C_6H_5$) oder

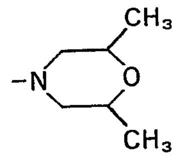

oder den Rest $-CH=C(CN)_2$, und

$R^5$ 2-Methyl-1-naphthyl, 2,6-Dimethyl-1-cyclohexyl oder den Rest

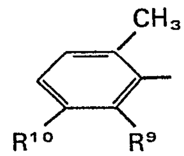

worin $R^9$ Wasserstoff, Methyl, Ethyl oder Chlor und $R^{10}$ Wasserstoff, Methyl, Phenyl, Chlor oder Brom

bedeuten.

Die Verbindung VI erhält man aus denen der Formel I, beispielsweise durch Umsetzen mit Aminen der Formel $R^5-NH-R^4$, worin $R^4$ und $R^5$ die angegebene Bedeutung haben.

Die Verbindungen VI eignen sich beispielsweise zur Behandlung folgender Pflanzenkrankheiten

*Phytophthora infestans* an Tomaten und Kartoffeln,

*Phytophthora parasitica* an Erdbeeren,

*Phytophthora cactorum* an Äpfeln,

*Pseudoperonospora cubensis* an Gurken,

*Pseudoperonospora humuli* an Hopfen,

*Peronospora destructor* an Zwiebeln,

*Peronospora sparsa* an Rosen,

*Peronospora tabacina* an Tabak,

*Plasmopara viticola* an Reben,

*Plasmopara halstedii* an Sonnenblumen.

Die nachfolgenden Beispiele dienen zur Erläuterung der Erfindung, ohne dieselbe einzuschränken. Wenn nicht anders vermerkt, ist stets das Gemisch der möglichen syn-Antistereoisomeren gemeint.

*Beispiel 1:*

a) In 150 ml Ethanol wurden 8,35 g (100 mmol) O-Methylhydroxylammoniumchlorid, 9,21 g (100 mmol) Glyoxylsäurehydrat sowie 8,0 g Kaliumacetat vorgelegt und auf 60° C erwärmt. Durch Zugabe von Kaliumcarbonat stellte man auf pH 4,5 ein und rührte 24 h bei 60° C. Danach liess man abkühlen, stellte mit 1 N NaOH auf pH 9 bis 10, wusch dreimal mit je 100 ml Methylenchlorid, trennte die wässerige Phase ab und stellte sie mit Salzsäure auf pH 2 bis 3 ein. Die letztere wurde längere Zeit mit Methylenchlorid perforiert, wobei der pH der Lösung nachgestellt wurde. Nach Abtrennen, Trocknen und Abdestillieren der organischen Phase blieben 6,26 g (72%) feste O-Methyloximinoessigsäure zurück, Fp. = 50 bis 53° C.

b) 5,2 g (60 mmol) O-Methyloximinoessigsäure und zwei Tropfen trockenes N,N-Dimethylformamid wurden in 50 ml trockenem Toluol vorgelegt und 8,5 ml (12,7 g; 100 mmol) Oxalylchlorid langsam zugetropft; nach Abklingen der Gasentwicklung wurde 30 min auf 40° C erwärmt. Bei Destillation ging das O-Methyloximinoessigsäurechlorid zusammen mit Toluol bei 100 bis 110° C über.

*Beispiel 2:*

27,6 g (300 ml) Glyoxylsäurehydrat und 30,3 g (300 mmol) Acetonoxim-O-ethylether wurden in 200 ml 1,2-Dimethoxyethan bis zum leichten Sieden erwärmt. Unter hohem Rücklaufverhältnis wurde über eine kurze Kolonne das entstehende Aceton/Wasser/1,2-Dimethoxyethanazeotrop (Übergang 60 bis 79° C) fortlaufend abdestilliert. Als die Destillattemperatur 82° C überstieg, wurde abgebrochen, abgekühlt und das Lösungsmittel entfernt. Das zurückbleibende Öl erstarrte beim Erkalten; Ausbeute 31,8 g (91%). Nach Anreiben mit Ether ergeben sich farblose Schüppchen von O-Ethyloximinoessigsäure, Fp. = 74 bis 77° C.

7,02 g (60 mmol) O-Ethyloximinoessigsäure und zwei Tropfen trockenes N,N-Dimethylformamid wurden in 50 ml trockenem Toluol gelöst und langsam 8,7 ml (12,7 g; 100 mmol) Oxalylchlorid hinzugefügt. Nach Abklingen der Gasentwicklung wurde 30 min auf 40° C und anschliessend Solvens und überschüssiges Oxalylchlorid vorsichtig im Vakuum abgezogen. Man erhielt 9,30 g O-Ethyloximinoessigsäurechlorid als blassbraunes Pulver, das noch Spuren von N,N-Dimethylformamid und Toluol enthielt.

$^1$H-NMR ($CDCl_3$): δ = 1,40 (t, $CH_3$, J = 7 Hz), 4,45 (q, $CH_2$), 7,65 (s, CH) ppm

Analog zu den Beispielen 1 und 2 wurden folgende Verbindungen der Formel I hergestellt bzw. lassen sich herstellen

*(Tabelle auf der nächsten Seite)*

*Verwendungsbeispiel*

*Herstellung von N-(1-Methoxycarbonyl-1-ethyl)-N-(2,6-dimethylphenyl)-(O-methyl)oximinoacetamid*

10,4 g (50 mmol) N-(2,6-Dimethylphenyl)-alaninmethylester wurden zusammen mit einer Spatelspitze 4-Dimethylaminopyridin in 250 ml trockenem Toluol vorgelegt. Unter Kühlung tropfte man 50 mmol O-Methyloximinoessigsäurechlorid, gelöst in Toluol, zu. Anschliessend wurde 3 h bei 70° C nachgerührt, wobei man einen schwachen Stickstoffstrom durch die Lösung perlen liess. Nach Abkühlen wurde die Lösung dreimal mit je 100 ml Wasser gewaschen, getrocknet und eingeengt. Das anfallende Öl (12,0 g; 82%) wurde säulenchromatographiert, was zu 9,2 g zähflüssiger Reinsubstanz führte.

IR: 1455 (breit), 1385 (breit), 1275, 1265, 1200 (breit), 1180, 1125, 1065, 1045, 975, 780 $cm^{-1}$.

| Beispiel Nr. | X | $R^1$ | $R^2$ | Phys. Daten IR ($cm^{-1}$; Fingerprints)/$^1$H-NMR |
|---|---|---|---|---|
| 3 | Cl | H | nPr | |
| 4 | Cl | H | 3-Allyl | IR: 1585, 1570, 1425, 1355, 1260, 1155 (stark), 1085, 1005 (stark, breit), 945, 910, 780, 700, 640 |
| 5 | Cl | H | 1-Cl-3-Allyl | $^1$H-NMR ($CDCl_3$): = 4,55 (mc, $CH_2$), 5,95 (mc, CH = CH), 7,25 (s, CH) ppm |
| 6 | Cl | H | 2-Cl-3-Allyl | IR: 1580, 1250, 1020 und 995 (beide stark), 910, 780, 675 |
| 7 | Cl | H | Benzyl | $^1$H-NMR ($CDCl_3$): = 5,25 (s, $CH_2$), 7,3 (s, $C_6H_5$), 7,5 (s, CH) ppm |
| 8 | Cl | H | 4-Cl-Benzyl | IR: 1585, 1490, 1240, 1155, 1015 und 997 (beide stark), 950, 928, 917, 801, 630 |
| 9 | Cl | H | 2,4-$Cl_2$-Benzyl | |
| 10 | Cl | H | 2,6-$Cl_2$-Benzyl | IR: 1580, 1560, 1435 (stark), 1365, 1095, 990 (breit, stark), 965, 780, 760, 675 |
| 11 | Br | H | Et | |
| 12 | Cl | H | Propargyl | |

**Patentansprüche** für die Vertragsstaaten BE, CH, DE, FR, GB, IT, LI, NL, SE

1. α-Oximinoessigsäurederivate der Formel I

$$R^2-O-N=CR^1-CO-X \qquad (I)$$

worin
$R^1$ Wasserstoff
$R^2$ einen ggf. substituierten $C_{1-6}$-Alkylrest, einen ggf. substituierten Allylrest, einen ggf. substituierten Propargylrest oder einen ggf. substituierten Benzylrest, und
X Chlor oder Brom
bedeutet.

2. Verfahren zur Herstellung der α-Oximinoessigsäurederivate der Formel I gemäss Anspruch 1, dadurch gekennzeichnet, dass man
a) α-Oxocarbonsäuren der Formel II

$$R^1-CO-COOH \qquad (II)$$

worin $R^1$ die angegebene Bedeutung hat, mit O-substituierten Acetonoximen der Formel III

$$CH_3-C(CH_3)=N-O-R^2 \qquad (III)$$

worin $R^2$ die angegebene Bedeutung besitzt, oder
b) α-Oxocarbonsäuren der Formel II mit O-substituierten Hydroxylaminen der Formel IV

$$H_2N-O-R^2 \qquad (IV)$$

worin $R^2$ die angegebene Bedeutung hat, oder Salzen dieser Verbindungen
umsetzt und die so erhaltenen Oximinocarbonsäuren der Formel V

$$R^2-O-N=C(R^1)-COOH \qquad (V)$$

worin $R^1$ und $R^2$ die angegebene Bedeutung haben, anschliessend mit einem Säurechlorid oder -bromid zur Reaktion bringt.

**Patentanspruch** für den Vertragsstaat: AT

Verfahren zur Herstellung der α-Oximinoessigsäurederivate der Formel I

$$R^2-O-N=CR^1-CO-X \qquad (I)$$

worin
$R^1$ Wasserstoff
$R^2$ einen ggf. substituierten $C_{1-6}$-Alkylrest, einen ggf. substituierten Allylrest, einen ggf. substituierten Propargylrest oder einen ggf. substituierten Benzylrest, und
X Chlor oder Brom
bedeuten, dadurch gekennzeichnet, dass man
a) α-Oxocarbonsäuren der Formel II

$$R^1-CO-COOH \qquad (II)$$

worin $R^1$ die angegebene Bedeutung hat, mit O-substituierten Acetonoximen der Formel III

$$CH_3-C(CH_3)=N-O-R^2 \qquad (III)$$

worin $R^2$ die angegebene Bedeutung besitzt, oder
b) α-Oxocarbonsäuren der Formel II mit O-substituierten Hydroxylaminen der Formel IV

$$H_2N-O-R^2 \qquad (IV)$$

worin $R^2$ die angegebene Bedeutung hat, oder Salzen dieser Verbindungen
umsetzt und die so erhaltenen Oximinocarbonsäuren der Formel V

$$R^2-O-N=C(R^1)-COOH \qquad (V)$$

worin $R^1$ und $R^2$ die angegebene Bedeutung haben, anschliessend mit einem Säurechlorid oder -bromid zur Reaktion bringt.

**Claims** for the Contracting States BE, CH, DE, FR, GB, IT, LI, NL, SE

1. α-Oximinoacetic acid derivatives of the Formula I

$$R^2{-}O{-}N{=}CR^1{-}CO{-}X \qquad (I)$$

where

$R^1$ is hydrogen, $R^2$ is an optionally substituted $C_1$-$C_6$-alkyl, an optionally substituted allyl, an optionally substituted propargyl or an optionally substituted benzyl, and X is chlorine or bromine.

2. A process for the preparation of α-oximinoacetic acid derivatives of the Formula I as claimed in Claim 1, wherein

(*a*) α-oxocarboxylic acids of the Formula II

$$R^1{-}CO{-}COOH \qquad (II)$$

where $R^1$ has the specified meaning, are reacted with O-substituted acetonoximes of the Formula III

$$CH_3{-}C(CH_3){=}N{-}O{-}R^2 \qquad (III)$$

where $R^2$ has the specified meanings, or

(*b*) α-oxocarboxylic acids of the Formula II are reacted with O-substituted hydroxylamines of the Formula IV

$$H_2N{-}O{-}R^2 \qquad (IV)$$

where $R^2$ has the specified meanings, or salts of these compounds,

and the resulting oximinocarboxylic acids of the Formula V

$$R^2{-}O{-}N{=}C(R^1){-}COOH \qquad (V)$$

where $R^1$ and $R^2$ have the specified meanings, are then reacted with an acid chloride or bromide.

**Claim** for the Contracting State: AT

A process for the preparation of α-oximinoacetic acid derivatives of the Formula I

$$R^2{-}O{-}N{=}CR^1{-}CO{-}X \qquad (I)$$

where $R^1$ is hydrogen, $R^2$ is an optionally substituted $C_1$-$C_6$-alkyl, an optionally substituted allyl, an optionally substituted propargyl or an optionally substituted benzyl, and X is chlorine or bromine, wherein

(*a*) α-oxocarboxylic acids of the Formula II

$$R^1{-}CO{-}COOH \qquad (II)$$

where $R^1$ has the specified meaning, are reacted with O-substituted acetonoximes of the Formula III

$$CH_3{-}C(CH_3){=}N{-}O{-}R^2 \qquad (III)$$

where $R^2$ has the specified meanings, or

(*b*) α-oxocarboxylic acids of the Formula II are reacted with O-substituted hydroxylamines of the Formula IV

$$H_2N{-}O{-}R^2 \qquad (IV)$$

where $R^2$ has the specified meanings, or salts of these compounds,

and the resulting oximinocarboxylic acids of the Formula V

$$R^2{-}O{-}N{=}C(R^1){-}COOH \qquad (V)$$

where $R^1$ and $R^2$ have the specified meanings, are then reacted with an acid chloride or bromide.

**Revendications** pour les Etats contractants BE, CH, DE, FR, GB, IT, LI, NL, SE

1. Dérivés d'acide α-oximinoacétique de formule I

$$R^2{-}O{-}N{=}CR^1{-}CO{-}X \qquad (I)$$

où

$R^1$ représente hydrogène,

$R^2$ un reste alkyle en $C_{1-6}$, éventuellement substitué, un reste allyle, éventuellement substitué, un reste propargyle, éventuellement substitué, ou un reste benzyle, éventuellement substitué, et

X représente chlore ou brome.

2. Procédé de préparation des dérivés d'acide α-oximinoacétique de formule I, selon la revendication 1, caractérisé par le fait que l'on fait réagir

a) des acides α-oxocarboxylique de formule II

$$R^1{-}CO{-}COOH \qquad (II)$$

où

$R^1$ a la signification indiquée, avec des acétonoximes substitués sur O de formule III

$$CH^3{-}C(CH_3){=}N{-}O{-}R^2 \qquad (III)$$

où

$R^2$ a la signification indiquée, ou

b) des acides α-oxocarboxyliques de formule II avec des hydroxylamines substituées sur O de formule IV

$$H_2N{-}O{-}R^2 \qquad (IV)$$

où

$R^2$ a la signification indiquée, ou des sels de ces composés, et les acides oximinocarboxyliques ainsi obtenus de formule V

$$R^2{-}O{-}N{=}C(R^1){-}COOH \qquad (V)$$

où

$R^1$ et $R^2$ ont les significations indiquées, sont mis ensuite en réaction avec un chlorure ou bromure d'acide.

**Revendication** pour l'Etat contractant: AT

Procédé de préparation des dérivés d'acide α-oximinoacétique de formule I

$$R^2{-}O{-}N{=}CR^1{-}CO{-}X \qquad (I)$$

où

$R^1$ représente hydrogène,

$R^2$ un reste alkyle en $C_{1-6}$, éventuellement substitué; un reste allyle, éventuellement substitué, un reste propargyle, éventuellement substitué, ou un reste benzyle, éventuellement substitué, et

X représente chlore ou brome,

caractérisé par le fait que l'on fait réagir

a) des acides α-oxocarboxylique de formule II

$$R^1-CO-COOH \quad (II)$$

où

$R^1$ a la signification indiquée, avec des acétonoximes substitués sur O de formule III

$$CH_3-C(CH_3)=N-O-R^2 \quad (III)$$

où

$R^2$ a la signification indiquée, ou

b) des acides α-oxocarboxyliques de formule II avec des hydroxylamines substituées sur O de formule IV

$$H_2N-O-R^2 \quad (IV)$$

où

$R^2$ a la signification indiquée, ou des sels de ces composés, et les acides oximinocarboxyliques ainsi obtenus de formule V

$$R^2-O-N=C(R^1)-COOH \quad (V)$$

où

$R^1$ et $R^2$ ont les significations indiquées, sont mis ensuite en réaction avec du chlorure ou bromure d'acide.